# EUROPEAN PATENT APPLICATION

(11) **EP 4 668 136 A1**
(43) Date of publication of application: **24.12.2025**
(21) Application number: 24211091.4
(22) Date of filing: 06.11.2024
(51) Int. Cl.: G06F 16/9032

(54) **RESULT GENERATION METHOD, GENERATION MODEL TRAINING METHOD, DEVICE, AND STORAGE MEDIUM**

(30) Priority: 18.06.2024 CN 202410788598
(71) Applicant: Baidu.com Times Technology (Beijing) Co., Ltd., Beijing 100080 (CN)
(72) Inventor: LU, Yujing, BEIJING (CN); XIA, Qiaolin, BEIJING (CN); WANG, Kaixiang, BEIJING (CN); WANG, Hao, BEIJING (CN); SHI, Haibo, BEIJING (CN); GU, Simiu, BEIJING (CN)
(74) Representative: Bringer IP

(57) **Abstract**

The disclosure provides a result generation method, a generation model training method, a device and a storage medium, relating to the field of computer technologies, and in particular, to the field of search and generative model technologies. The result generation method includes: acquiring (S301) a change query corresponding to an input query; obtaining (S302) a reference result by searching according to the input query and the change query corresponding to the input query; and generating (S303) an output result corresponding to the input query according to the input query, the change query corresponding to the input query and the reference result.

## Description

### TECHNICAL FIELD

The present disclosure relates to the field of computer technologies, and in particular, to the field of search and generative model technologies.

### BACKGROUND

Generative large models have achieved significant improvements in natural language understanding and generation capabilities. This progress has not only advanced the development of artificial intelligence technology but has also prompted search systems to undergo restructure and upgrades. Traditional search systems provide multiple results to meet the needs of the target object through processes such as recall, rough ranking, precise ranking, and fine-tuning. In contrast, current search systems incorporate Retrieval-Augmented Generation (RAG), which can generate an accurate, effective, well-structured, and content-rich response.

### SUMMARY

The present disclosure provides a result generation method, a generation model training method, a device and a storage medium.

According to an aspect of the present disclosure, provided is a result generation method including:
acquiring a change query corresponding to an input query;
obtaining a reference result by searching according to the input query and the change query corresponding to the input query; and
generating an output result corresponding to the input query according to the input query, the change query corresponding to the input query and the reference result.

According to another aspect of the present disclosure, provided is a generation model training method including:
inputting a prompt of a training sample into a generation model to be adjusted to obtain a predicted answer; and
adjusting the generation model according to an expected answer of the training sample and the predicted answer,
wherein the prompt of the training sample includes an original query, a change query, a search result and a target instruction.

According to an aspect of the present disclosure, provided is a result generation apparatus including:
an acquisition module, configured to acquire a change query corresponding to an input query;
a search module, configured to obtain a reference result by searching according to the input query and the change query corresponding to the input query; and
a generation module, configured to generate an output result corresponding to the input query according to the input query, the change query corresponding to the input query and the reference result.

According to an aspect of the present disclosure, provided is a generation model training apparatus including:
an input module, configured to input a prompt of a training sample into a generation model to be adjusted to obtain a predicted answer; and
an adjustment module, configured to adjust the generation model according to an expected answer of the training sample and the predicted answer,
wherein the prompt of the training sample includes an original query, a change query, a search result and a target instruction.

According to another aspect of the present disclosure, provided is an electronic device including:
at least one processor; and
a memory connected in communication with the at least one processor;
wherein the memory stores an instruction executable by the at least one processor, and the instruction, when executed by the at least one processor, enables the at least one processor to execute the method as set forth above.

According to another aspect of the present disclosure, provided is a non-transitory computer readable storage medium storing a computer instruction, wherein the computer instruction causes a computer to perform the method as set forth above.

According to another aspect of the present disclosure, provided is a computer program product including a computer program, wherein the computer program, when executed by a processor, implements the method as set forth above.

According to the disclosure, the output result is generated according to the input query, the change query corresponding to the input query, and the reference result obtained by searching, such that the relevance between the generated result and the input query can be improved and the accuracy of the generated result is increased.

It should be understood that the content described in this part is not intended to identify critical or essential features of embodiments of the present disclosure, nor is it used to limit the scope of the present disclosure. Other features of the present disclosure will be easily understood through the following description.

### BRIEF DESCRIPTION OF THE DRAWINGS

The accompanying drawings are used to better understand the present solution, and do not constitute a limitation to the present disclosure.
FIG. 1 is a diagram schematically illustrating a comparison between an explicit feedback signal and an implicit feedback signal according to the present disclosure;
FIG. 2 is a flow chart schematically illustrating the use of RAG in conjunction with an LLM according to the present disclosure;
FIG. 3 is a flow chart schematically illustrating a result generation method according to an embodiment of the present disclosure;
FIG. 4 is a flow chart schematically illustrating a result generation method according to another embodiment of the present disclosure;
FIG. 5 is a flow chart schematically illustrating a result generation method according to another embodiment of the present disclosure;
FIG. 6 is a flow chart schematically illustrating a result generation method according to another embodiment of the present disclosure;
FIG. 7 is a flow chart schematically illustrating a result generation method according to another embodiment of the present disclosure;
FIG. 8 is a flow chart schematically illustrating a result generation method according to another embodiment of the present disclosure;
FIG. 9 is a flow chart schematically illustrating a generation model training method according to an embodiment of the present disclosure;
FIG. 10 is a schematic diagram of change query cleaning based on a session according to an embodiment of the present disclosure;
FIG. 11 is a schematic diagram of change query aggregating based on a time window according to an embodiment of the present disclosure;
FIG. 12 is a diagram schematically illustrating a generation system according to an embodiment of the present disclosure;
FIG. 13 is a block diagram schematically illustrating a result generation apparatus according to an embodiment of the present disclosure;
FIG. 14 is a block diagram schematically illustrating a result generation apparatus according to another embodiment of the present disclosure;
FIG. 15 is a block diagram schematically illustrating a generation model training apparatus according to an embodiment of the present disclosure; and
FIG. 16 is a block diagram of an electronic device used to implement the methods according to the embodiments of the present disclosure.

### DETAILED DESCRIPTION

Hereinafter, descriptions to exemplary embodiments of the present disclosure are made with reference to the accompanying drawings, include various details of the embodiments of the present disclosure to facilitate understanding, and should be considered as merely exemplary. Therefore, those having ordinary skill in the art should realize, various changes and modifications may be made to the embodiments described herein, without departing from the scope of the present disclosure. Likewise, for clarity and conciseness, descriptions of well-known functions and structures are omitted in the following descriptions.

A generative large model used in a Retrieval-Augmented Generation (RAG), due to large-scale pre-training, has internalized world knowledge within its parameters. This allows for a deep understanding of primary needs of a target object. By summarizing and generalizing relevant contents from search results, it significantly enhances the satisfaction of the target object and also reduces the dependence on the accuracy of ranking, extraction, and other processes.

However, the restructure of the search system lacks the perception and utilization on a behavioral feedback signal a of the target object. Traditional search systems make relevance ranking based on a behavior of the target object such as searches and clicks, and use the behavioral feedback signal of to enhance the relevance of search results and the satisfaction of the target object.

The behavioral feedback signal can mainly include two types: implicit feedback signal and explicit feedback signal, which will be described in detail as follows.

### I. Type of Feedback Signal

### 1. Implicit Feedback Signal

Definition: For a given search query and return answer, the target object does not actively feedback or report its degree of satisfaction with the answer. However, due to influence of the current answer, other search behaviors subsequently generated can indirectly reflect the degree of satisfaction of the target object with the current answer. These subsequent behaviors are considered implicit feedback signals. Typically, these are common historical behavior signals during the active search process of the target object (such as search history and click data).

The advantages of the implicit feedback signal mainly include: high signal density, rich signal variety, low data unbiasedness, and low noise rate, for example; the disadvantages mainly include: unapparent signal significance.

### 2. Explicit Feedback Signal

Definition: For a given search query and return answer, the system requests the target object to provide or the target object actively feedbacks its degree of satisfaction with the answer. This directly reflects the degree of satisfaction of the target object with the current answer. Such a degree of satisfaction is considered as an explicit feedback signal, which is typically feedback and survey information actively collected by the system from the search target object.

The advantages of the explicit feedback signal mainly include: the obvious significance of high-value signal; the disadvantages mainly include: signal sparseness, significant deviation between the satisfaction degree distribution and the real distribution due to the influence of the collection mode, higher noise rate, few signal types, and serious dependence on the product design.

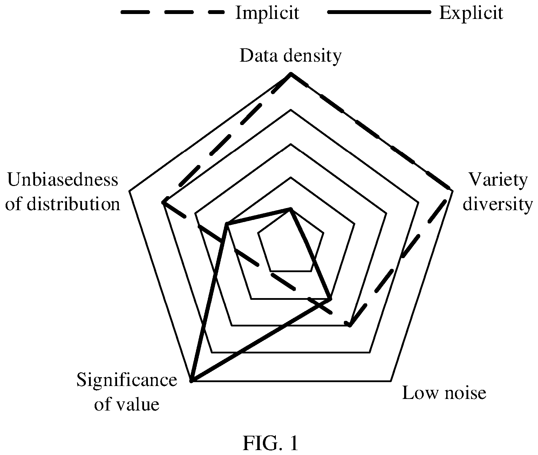

The comparison between the explicit feedback signal and the implicit feedback signal in terms of data density, unbiasedness of distribution, significance of value, low noise, variety diversity, for example, can be seen in FIG. 1 as reference.

### II. Examples of Feedback Signal

### 1. Examples of Implicit Feedback Signal

(1) Current answer has a link for clicking through a landing page.
   i. Implicit Signal: a click-through rate for the answer, duration of stay after a click-through for the answer, a share of clicks among all the answers on the page and a share of duration of stay of clicks among all the answers on the page.
   ii. Indication of Satisfaction: the target object stays the landing page for a long time after click-through, while other answers receive no clicks or very short duration of stay.
   iii. Indication of Dissatisfaction: The target object does not click through but instead clicks on other answers and stays for a long time.
   iv. Indication of Dissatisfaction: The target object clicks through but also clicks on other answers and continues to browse through additional pages for more answers.
(2) After the target object finishes reading the current answer, a query request is subsequently changed to search for more answers.
   i. Implicit signal: whether there is a change query, a frequency of change query, a click frequency after change query, and whether there is a change in intention after change query.
   ii. Indication of Satisfaction: the target object does not continue to change the query search or change the intention after the change query.
   iii. Indication of Dissatisfaction: the target object frequently changes the query search.
   iv. Indication of Dissatisfaction: after changing the query search, the target object clicks a new result returned subsequently.
(3) There is a video in the current answer.
   i. Implicit signal: whether the video is finish playing and the duration of stay.
   ii. Indication of Satisfaction: the target object has completely watched the video.
   iii. Indication of Dissatisfaction: the target object skips the video to see other answers and stays there for a long time.
   iv. Indication of Dissatisfaction: the target object clicks but clicks other answers as well, and browses through additional pages for more answers.

### 2. Examples of Explicit Feedback Signal

(1) There is a questionnaire under the current answer, providing 1 to 5 satisfactory scoring options.
   i. Explicit signal: 1 to 5 scores.
   ii. Indication of Satisfaction and Dissatisfaction: 1 to 5 scores for direct indication.
(2) The current answer can be upvoted, downvoted and shared.
   i. Explicit signal: upvote, downvote and sharing.
   ii. Indication of Satisfaction and Dissatisfaction: the upvote and the sharing are satisfactory, and the downvote is unsatisfactory.

### Method for Utilizing Two Kind of Feedback Signals

### 1. Method for Utilizing Implicit Feedback Signal

In search systems, an implicit behavior signal is widely used to optimize multiple search results, mainly for Learning to Rank of a candidate result. A goal of Learning to Rank (LTR) is to create a ranking model by learning target object behavior and historical data, which that can rank a set of candidates such that the ranking of the results is as close as possible to the ranking exhibited by the target object behavior. The Learning to Rank method generally encompasses a serial of machine learning techniques, including but not limited to Pointwise, Pairwise and Listwise methods, for example, which may train the ranking model based on various types of target object feedback (including clicks, purchases, scores and duration of stay, for example).

### Examples relating Learning to Rank

(1) Click-through Rate Prediction (CTR), as a Learning to Rank model, is widely and directly applied to a search engine, intending to dynamically adjust and optimize a search result according to the click behavior of a target object. A basic idea thereof is that the click behavior of the target object on search results may reflect the relevance and attractiveness of the search results. If a search result achieves a higher click-through rate, this generally means that the result is more relevant to the search of the target object or more attractive to the target object. Therefore, by analyzing the click data of the target object, the search engine may re-rank the preliminary search results to better meet the information requirements of the target object.
   The main problems of the re-ranking of Click-through Rate Prediction include: cold start, data sparsity, lack of content understanding, average click rate deviation, noise and fraudulent click, high training complexity, large feature engineering quantity, and reasonable selection of evaluation indexes, for example.
(2) Semantic Vector Retrieval (Embedding-based Retrieval) maps the target object search and content items to one vector space and calculates their similarity to efficiently and accurately search for results. In addition, it encodes semantic information into a vector by training a complex model, so that similar searches and contents are close in the vector space, thereby improving the search accuracy while processing fuzzy search and deep intention.
   The main problems of the Embedding-based Retrieval include: high computational complexity, semantic drift problem, and accuracy problem, for example.
(3) Hyperlink Analysis (HA) technique is a technique which uses a link relationship between pages, such as the quantity and quality of other pages linked thereto to evaluate and analyze importance of pages. Although the Hyperlink Analysis technique does not directly utilize the target object's feedback, the intra-web links referred to by the Hyperlink Analysis technique are mostly from the contents produced by the target object. The Hyperlink Analysis technique is not only applied to Search Engine Optimization (SEO), but also widely applied to the fields of social network analysis, academic citation analysis and the like.

The main problems of the Hyperlink Analysis technology include: fraudulent links, disregarding content quality, update hysteresis, disregarding target object behavior, and computational complexity, for example.

In summary, the scheme of utilizing the implicit signal can make good use of the behavioral feedback signal of the target object, but has some deficiencies. Most of these deficiencies can be addressed by the RAG (Retrieval-Augmented Generation) technique. However, the RAG has its own drawbacks in using the behavioral feedback signal.

### 2. Method for Utilizing Explicit Feedback Signal

The number of implicit feedback signals is huge, but these traditional implicit signals cannot be directly utilized in the case that the generative large model in the RAG is introduced. This is primarily because the generation model (which may also be referred to as a generative model) requires understanding and generation rather than simple ranking or selection. The working principle of the RAG will be briefly described as follows.

RAG is a new type of search and natural language processing technology that combines search and generation to generate a richer and natural language output. RAG works by first using a search system to search a large document library for relevant documents, and then using these searched documents to drive the output of the generative model. Specifically, the RAG first encodes an input question using a pre-trained language model such as Bidirectional Encoder Representations from Transformers (BERT), and then searches the document library for documents related to the question using a search system. The searched documents are then fed into a pre-trained sequence-to-sequence model (e.g., BERT) along with the question to generate a final answer. The advantage of this approach is that it can take use of large amounts of unstructured text data, rather than training the data, to generate a richer and natural answer. Moreover, the RAG's answer is generally more global and consistent since it considers all the documents searched during answer generation. In general, the RAG technique integrates the advantages of searching and generation to enable a natural language processing system to generate a linguistic output with higher quality.

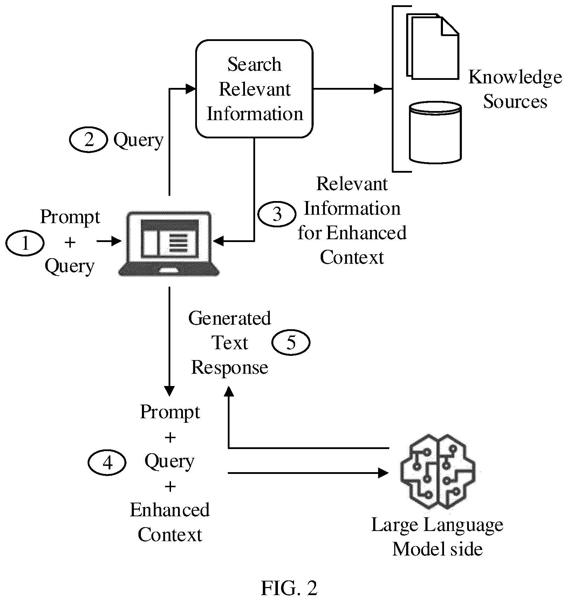

FIG. 2 is a flow chart illustrating the use of RAG in conjunction with a Large Language Model (LLM). As shown in FIG. 2, after acquiring a prompt word and a request (query), a device side searches Knowledge Sources such as web pages and databases based on a request of Search Relevant Information to acquire Relevant Information for Enhanced Context. By inputting the prompt word, the query and the enhanced context into a large language model side, a text response generated by the large language model side can be received.

For the generative large model, an explicit feedback signal can be introduced into a training target of reinforcement learning to indirectly optimize the base generative model. Examples are as follows:
a. Reinforcement Learning from Human Feedback (RLHF) is a technique which integrates reinforcement learning and human feedback, providing optimization of a model behavior through a human feedback. The technique first acquires foundational capabilities through pre-training with large datasets, then collects positive and negative feedback from humans. These feedbacks are used as reward signals to further train the model using the reinforcement learning method, thereby gradually improving its performance. The method is suitable for the field of natural language processing, such as text generation and dialogue systems, and can enable the model to generate an output more in accordance with human expectation. The RLHF has advantages of reduced annotation dependence on handwritten answers and improved model adaptability and generalization ability, but also faces a challenge of how to efficiently acquire and exploit the human feedbacks.
b. Direct Preference Optimization (DPO) is a technique which integrates the reinforcement learning and the human feedback. The main difference between DPO and RLHF lies in their learning and optimizing the strategy. The DPO can be optimized through single-stage policy training, whereas the RLHF learns and makes decisions by combining past experiences and future predictions. Therefore, the DPO has the characteristics of higher performance and light calculation weight, does not need to fit a reward model, does not need to sample from a Language Model (LM) during fine tuning, and does not need a large amount of super-parameter tuning.

The generative large model in RAG, in combination with human feedbacks (e.g., RLHF technology), faces major challenges in how to efficiently acquire and exploit the human feedbacks, specifically including:
1. Quality and consistency of feedback: The human feedback is subjective in nature, and different persons may have different ratings for the same model output. Such subjectivity and inconsistency of evaluation criteria can introduce noise during the training process, and affect the learning efficiency and final performance of the model. Ensuring the human feedbacks with high quality and consistency is a challenge.
2. Scale and cost of feedback: The generative large model typically requires a large amount of training data. When training with the human feedback, efficiently collecting a sufficient scale of the human feedbacks becomes a challenge. Furthermore, manual evaluation and provision of feedback is costly, especially for a task requiring expert knowledge judgment, such that the cost and feasibility become limiting factors.
3. Timeliness of feedback: The reinforcement learning is a dynamic and iterative process that ideally requires real-time or near real-time feedback to adjust the model. However, in practice, there is often a delay in collecting and processing human feedback, which affects the continuity and efficiency of training.
4. Data bias problem: The human feedback may carry personal biases, which, if not properly addressed, can be learned by the model and thereby reproduced in the output of the model. Additionally, ensuring that the process of collecting and using the human feedback meets ethical standards and protects individual privacy is crucial.

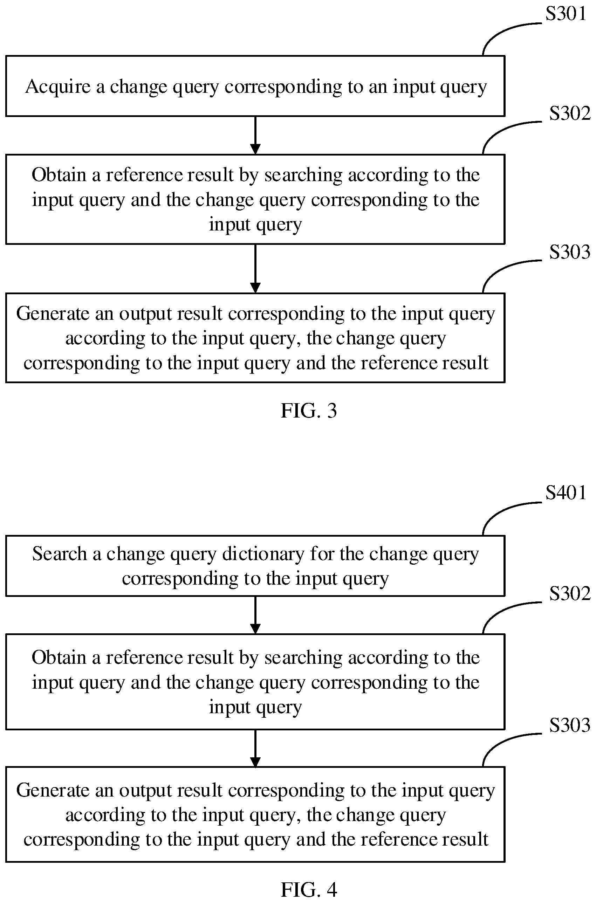

FIG. 3 is a flow chart schematically illustrating a result generation method according to an embodiment of the present disclosure. The method can include:
S301, acquiring a change query corresponding to an input query;
S302, obtaining a reference result by searching according to the input query and the change query corresponding to the input query; and
S303, generating an output result corresponding to the input query according to the input query, the change query corresponding to the input query and the reference result.

In the embodiment of the disclosure, the input query may include a query request (query) input to a search engine. The input query may also be referred to as a search query, an input search query, an initial search query, and the like. For example, the input query may include a search sentence and/or a search keyword input in a search engine, and may also include a question input into a question-and-answer page of a large-model. A correspondence between some queries may be preserved in advance. After the input query is obtained, the correspondence may be searched for one or more change queries corresponding to the input query. The change query may also be referred to as a transformed query, a changed query, a changed search query, a changed query request, and the like. The initially obtained input query and the change query may have a same, similar, or different intention. The change query retained after cleaning and the input query may have a similar or same intention or semantics. For example, a change query dictionary may be established to store a plurality of queries therein according to search intentions. The plurality of queries with the same or similar intentions may be understood to have a correspondence relationship and be subsequently matched in the change query dictionary according to the input query, so as to obtain one or more corresponding change queries. The matching may be performed in the dictionary according to a keyword of the input query, or may be performed in the dictionary according to an intention of the input query.

In the embodiment of the disclosure, the search system and/or the search engine may conduct a search by synthesizing the input query and its corresponding change query to obtain a search result (or referred to as a query result or a reference result, for example). For example, the intention induction processing is performed on the input query and its corresponding one or more change queries to obtain an induced intention. The induced intention is input into the search engine for searching to obtain the search result. In the embodiment of the disclosure, the searching may be referred to as query or retrieval, for example.

In the embodiment of the disclosure, the input query and its corresponding change query can be first used for searching to obtain a reference result, then the input query, the change query, the reference result are spliced according to a prompt template of the model, and then the spliced prompt is input into the generative large model to obtain an answer in response to the input query and the change query.

According to the embodiment of the disclosure, generating the output result according to the change query corresponding to the input query and the reference result obtained by searching can improve the relevance between the generated result and the input query and increase the accuracy of the generated result.

FIG. 4 is a flow chart schematically illustrating a result generation method according to another embodiment of the present disclosure. The method may include one or more features of the result generation method described above. In an implementation, Step S301 of acquiring the change query corresponding to the input query may include:
S401, searching a change query dictionary for the change query corresponding to the input query.

In the embodiment of the disclosure, the change query dictionary may be established according to historical original queries and change queries, for example, those input into a search system or a search engine. For example, the change query dictionary may store the correspondence of multiple queries having the same or similar intentions. One or more change queries corresponding to the input query can be located in the change query dictionary according to the keyword of the intention of the input query.

According to the embodiment of the disclosure, the change query dictionary is searched and matched according to the input query, so that the change query corresponding to the input query can be obtained. On the basis of the change query corresponding to the input query, search sentences used for searching can be enriched, the search intention can be clarified, the accuracy and richness of the reference result obtained by searching can improved, and the accuracy and richness of the generated result can further be improved.

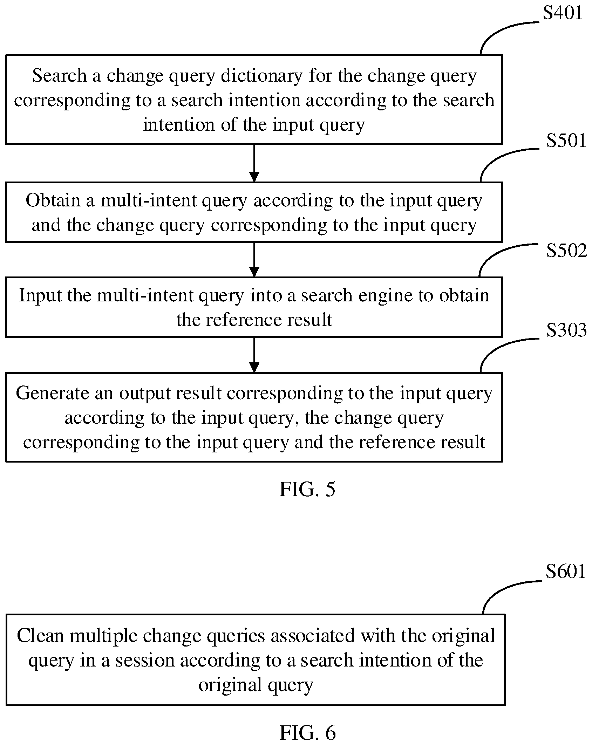

FIG. 5 is a flow chart schematically illustrating a result generation method according to another embodiment of the present disclosure. The method may include one or more features of the result generation method described above. In an implementation, Step S302 of obtaining the reference result by searching according to the input query and its corresponding change query includes:
S501, obtaining a multi-intent query according to the input query and the change query corresponding to the input query; and
S502, inputting the multi-intent query into a search engine to obtain the reference result.

In the embodiment of the disclosure, the model can be used to induce (or classify) the input query and its corresponding one or more change queries, resulting in the multi-intent query. For example, if an input query is "How tall is Mount Tai?", its corresponding change queries could be "Height of Mount Tai", "How tall is the peak of Mount Tai?", and "What is the height of Mount Tai?" Here, the model identifies the intention of the input query and its corresponding change queries as "Querying the height of Mount Tai", and the intention of change queries as "Querying the height of Mount Tai". By combining the input query and its corresponding change queries, "Querying the height of Mount Tai" can be induced as the multi-intent query.

In the embodiment of the disclosure, after the multi-intent query is obtained, the multi-intent query can be input into a search engine as a query sentence, and the search engine can search a webpage library for one or more search results corresponding to the multi-intent query. For example, entering the multi-intent query "Querying the height of Mount Tai" into the search engine may yield corresponding search results. If a plurality of multi-intention queries are obtained through induction, a plurality of query sentences can be generated and input into the search engine, respectively, to obtain search results. Some or all of these search results may be used as reference results for generating output results.

According to the embodiment of the disclosure, the multi-intent query obtained based on the input query and its corresponding change query can be used to search the search engine for the reference results that satisfy the multi-intent query, providing the reference results with the same or similar intention to the input query and change query, thereby increasing the richness and the accuracy of the reference results.

In an implementation, Step S501 of obtaining the multi-intent query according to the input query and the change query corresponding to the input query includes: obtaining the multi-intent query by using a large language model to induce the input query and the change query corresponding to the input query.

In the embodiment of the disclosure, the large language model may be used to perform intention analysis and/or semantic analysis on an input query and its corresponding one or more change queries, and the intention of the input query and its corresponding change queries is induced according to an analysis result to obtain the multi-intent query. The large language model can be replaced by a natural language processing model, a semantic understanding model or an intention understanding model in a generative large model, for example.

According to the embodiment of the disclosure, the large language model can be used to induce and summarize the input query and its corresponding one or more change queries to obtain the multi-intent query, so that the model is enabled to learn how to understand and induce an intent of the input query and/or the change query, thereby providing thought and guidance for answering for a subsequent model generated answer.

In an implementation, Step S303 of generating the output result corresponding to the input query according to the input query, the change query corresponding to the input query and the reference result includes: inputting the multi-intent query and the reference result into a generation model to obtain the output result corresponding to the input query.

In the embodiment of the disclosure, the generation model may include a generative large model. In the case that the multi-intent query and its corresponding reference result are obtained, a prompt may be obtained by using a combination of the query and the result. The prompt is input into the generation model. The generation model may generate the output result corresponding to the input query according to the input prompt. For example, if the input query includes a question, the output result of the generation model may include an answer corresponding to the question.

According to the embodiment of the disclosure, the multi-intent query and its corresponding reference result are input into the generation model to obtain the output result meeting the multi-intent query, such that the output result can better meet the intention requirement, thereby improving the accuracy and richness of the output result.

In an implementation, a training sample of the generation model includes a prompt and an answer, and the prompt includes an original query, a change query, a search result, and a target instruction.

In the embodiment of the disclosure, the original query and the change query in the prompt of the training sample may be obtained from a historical record. An answer to the training sample may be obtained by labeling. The original query used in the model training phase may be the input query in the model prediction phase. Based on the original query and its corresponding one or more change queries, the search result can be obtained in the search engine, and the target instruction can include an answer requirement required by the generation model. For example, the target instruction can include a comprehensive answer in combination with the original query, change query and search result; the forms of paragraph breaks, listings, and holding are used as much as possible; and the output result requires high correctness, strong logic and the like. According to the original query, the change query, the search result and the target instruction, a task description area, an interactive information area, a search result area and an instruction area of the prompt can be constructed. For example, the task description area may describe a task that needs to be executed by the generation model, and may be constructed based on the original query or the multi-intent query. The interactive information area may describe a potential requirement that needs to be referenced by the generation model during answer generating, and may be constructed based on one or more change queries. The search result area can be constructed based on the search result corresponding to the multi-intent query induced from the original query and the change query. The instruction area may be constructed based on the target instruction.

According to the embodiment of the disclosure, the prompt of the generation model can be obtained based on the original query, the change query, the search result and the target instruction. The generation model can generate the output result which is greatly related to the original query and the change query and complies with the search intention, thereby improving the accuracy of the output result.

In an implementation, the original query and the change query are obtained by sampling the change query dictionary.

In the embodiment of the disclosure, the original queries and the change queries of a plurality of target objects can be correspondingly stored in the change query dictionary according to their intentions. In the training stage, the original query and its corresponding change query can be obtained by sampling from the change query dictionary to construct a part of contents of the prompt in the training sample. The change query dictionary may be updated in real-time or periodically.

According to the embodiment of the disclosure, the original query and the change query for constructing the prompt can be obtained from the change query dictionary such that the correspondence relation between the original query and the change query in the dictionary becomes more accurate, thereby improving the accuracy and the richness of the training sample, and improving the accuracy and the richness of the output result of the model.

FIG. 6 is a flow chart schematically illustrating a result generation method according to another embodiment of the present disclosure. The method may include one or more features of the result generation method described above. In an implementation, the method further includes:
S601, cleaning multiple change queries associated with the original query in a session according to a search intention of the original query.

In the embodiment of the disclosure, a dialogue or access process on the search engine is generally referred to as a session. When a target object inputs a keyword in the search engine to conduct a search, it means that the target object opens a session. Subsequently, continuous searching, link clicking, page browsing and other activities within a period of time are considered to be the behaviors under the session, and the session is considered to be closed until the target object is not active any more for a period of time. If a plurality of rounds of original query and multiple change queries are included in a session, the multiple change queries may be considered to be multiple change queries associated with the original query. The multiple change queries associated with the original query in the session can be cleaned based on the search intention of the original query, to clean off change queries which are different from or have low similarity to the search intention of the original query. Further, the change queries reserved after cleaning and its corresponding original query can be stored in the change query dictionary.

In the embodiment of the disclosure, the search intention of the original query and the change query can be determined through keyword matching and semantic understanding models, for example.

According to the embodiment of the disclosure, the change queries within the same session can be cleaned based on the search intention of the original query in the session to obtain the change queries that have the same or similar intention as the original query, This improves the correlation between the change query and the original query, and further enhances the relevance of the search results and the generated results to the original query.

In an implementation, the cleaning the multiple change queries associated with the original query in the session according to the search intention of the original query includes at least one of:
obtaining, based on keyword matching, a first similarity between the original query and the change query in the session, determining whether the search intention of the original query is similar to a search intention of the change query according to the first similarity, and retaining the change query has the search intention similar to the original query; or
obtaining, based on semantic understanding for intention discrimination, a second similarity between the original query and the change query in the session, determining whether the search intention of the original query is similar to the search intention of the change query according to the second similarity, and retaining the change query has the search intention similar to the original query.

In the embodiment of the disclosure, the keyword matching may include text matching algorithm such as term frequency - inverse document frequency (TF-IDF) index and Best Matching 25 (BM 25). A similarity score (i.e., the first similarity) between the change query and the original query can be calculated by using the text matching algorithm, to judge whether the change query is similar to the intention of the original query or not. If the similarity score between the change query and the original query reaches a preset threshold value, it is determined that their intentions are similar; if the similarity score between the change query and the original query does not reach the preset threshold, it is determined that their intentions are not similar. The change query which is similar to the search intention (original intention) of the original query is retained, while the change query which is not similar to the original intention is deleted. For example, if the threshold is 7 and the similarity score between the original query Q1 and the change query Q2 is 5, then Q2 is cleaned off; if the similarity score between the original query Q1 and the change query Q3 is 8, the Q3 is retained.

In the embodiment of the disclosure, semantic similarity between the original query and the change query may be scored by using a model for semantic understanding, such as a large language model, a natural language processing model, a semantic understanding model, and an intention understanding model in a generative large model, so as to filter out the change query similar to the original intention of the original query. For example, the original query and the change query are spliced together and input into the model to obtain semantic similarity (i.e., the second similarity) score between the original query and the change query, so as to filter out the change query similar to the search intention (original intention) of the original query according to the similarity score between the original query and the change query. For example, if the similarity score between the original query and the change query reaches a preset threshold value, it is determined that their intentions are similar; if the similarity score between the original query and the change query does not reach the preset threshold, it is determined that their intentions are not similar.

In some examples, a part of change queries may be cleaned from the change queries associated with the original query based on the first similarity, and then the remainder of the change queries may be cleaned based on the second similarity. In other examples, the change queries may be cleaned in conjunction with the first similarity and the second similarity. For example, if the first similarity and the second similarity between the original query and a change query do not reach the respective threshold values, the change query is deleted. As another example, if the first similarity or the second similarity between the original query and a change query reaches the corresponding threshold value, the change query is retained. As another example, if the first similarity and the second similarity between the original query and a change query both reach the respective threshold values, the change query is retained.

According to the embodiment of the disclosure, the change query which is not similar to the original query in the session can be cleaned off in various ways while retaining the change query has the search intention similar to the original query for subsequent operation, favorably preserving the change query which is strongly associated with the search intention of the original query, thereby increasing the accuracy of the search result and the generated result.

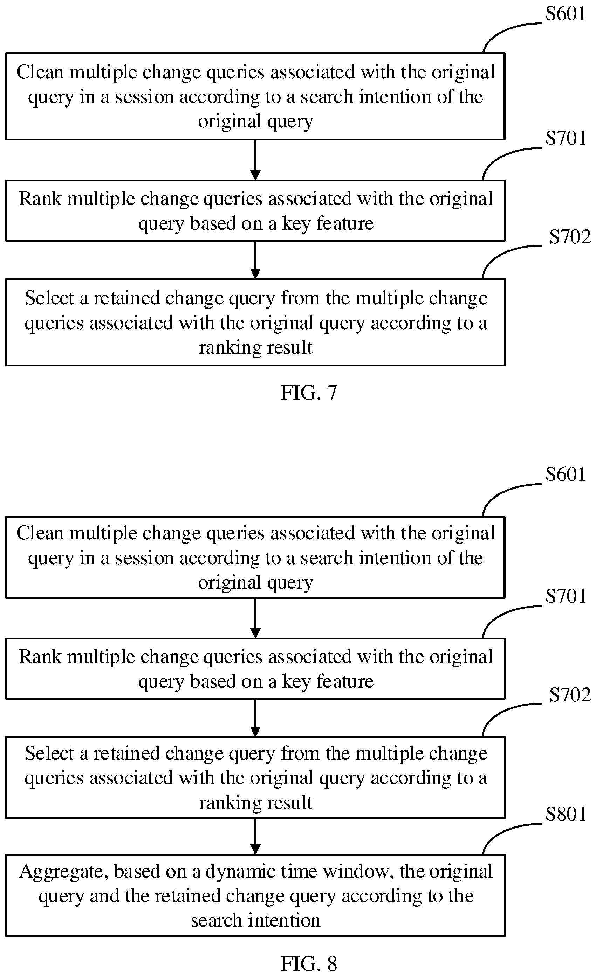

FIG. 7 is a flow chart schematically illustrating a result generation method according to another embodiment of the present disclosure. The method may include one or more features of the result generation method described above. In an implementation, the method further includes:
S701, ranking multiple change queries associated with the original query based on a key feature, wherein the key feature includes at least one of: a change query rate, a change query source or feedback information after change query; and
S702, selecting a retained change query from the multiple change queries associated with the original query according to a ranking result.

In the embodiment of the disclosure, if the result generation method includes the cleaning process of S601, the ranking process may be subsequent to the cleaning process. If the result generation method does not include the cleaning process of S601, the ranking process may be performed after the original query and the change query are obtained. After the original query and the multiple change queries associated with the original query are obtained, the multiple change queries may be ranked according to at least one of the change query rate, the change query source, or feedback information after the change query, for example. The change query rate may represent a probability of changing from one query, such as Question A which has been queried, to another query, such as Question B, to continue the search. The change query rate can be inferred or statistically determined based on historical sessions. There are many sources of the change query, for example, a new search actively initiated in a search box; a new search initiated based on subsequent recommended input words in the search box; a new search initiated by clicking on historical search records; a new search initiated by clicking on a recommended search question on a search result page, for example. The feedback information after the change query can represent an operation feedback for the search result after the change query, and can include implicit feedback and explicit feedback, such as duration of stay and clicked link.

In some examples, the change queries may be ranked according to a single key feature. For example, the change queries are ranked according to a change query rate from high to low or from low to high. As another example, the change queries are ranked according to the change query source, where the search actively initiated in the search box is ranked higher, and the search initiated according to the subsequently recommended input word in the search box is ranked lower. As another example, the change queries are ranked according to the feedback information after the change query, or ranked according to the duration of stay on the search result page.

In other examples, the change query rate, the change query source, and the feedback information after the change query may be comprehensively considered based on their respective weights, and comprehensive ranking may be performed according to weighted scores to obtain a ranking result.

In the embodiment of the disclosure, the top K change queries may be selected from the ranking result for subsequent processing. For example, the original query and its corresponding top K change queries after ranking are added to the change query dictionary. As another example, the original query and its corresponding top K change queries after ranking are used to generate respective prompts, and the prompts and labeled answers are used to construct training samples. As another example, ranking is performed first, and then the top K change queries retained after the ranking is cleaned.

According to the embodiment of the disclosure, the change queries can be ranked according to at least one of the change query rate, the change query source, and the feedback information after the change query, and the selection is performed on the ranked change queries, so that the number of change queries with small relevance to the search intention of the original query can be reduced, and the data amount to be processed by the search engine and the generation model can be further reduced. This not only can increase the speed of operations such as search and generation but also can improve the relevance of the generated result to the original query and its accuracy.

FIG. 8 is a flow chart schematically illustrating a result generation method according to another embodiment of the present disclosure. The method may include one or more features of the result generation method described above. In an implementation, the method further includes:
S801, aggregating, based on a dynamic time window, the original query and the retained change query according to the search intention.

In the embodiment of the disclosure, the dynamic time window may include a data collection window determined according to a certain period of time, such as a time window within 1 hour, a time window within 24 hours, a time window of approximately three days and a time window of approximately one month. The original queries of several target objects and their associated multiple change queries (e.g., original query and change query associations in the same session) may be collected from multiple sources according to a period of time given by the dynamic time window. After the above cleaning step and/or ranking step, a part of change queries may be retained from the multiple change queries associated with the original query. The original query and the retained change queries may be aggregated according to the search intention, and an aggregated result may include a sequence of change queries. The sequence of change queries may include multiple change queries, or may include the original query. The sequence of aggregated change queries may be added to the change query dictionary.

In the embodiment of the application, the sequence of cleaning, ranking and aggregating of the change queries can be flexibly changed as required and is not limited herein. In an example, the change queries may be cleaned first, then the change queries retained after cleaning may be ranked, and the ranked change queries may be aggregated. In another example, the change queries may be cleaned first, then the change queries retained after cleaning may be aggregated, and finally the aggregated change queries may be ranked.

According to the embodiment of the disclosure, the original query and the change query can be aggregated based on the search intention within the dynamic time window. This is beneficial both for obtaining a short-term search intention and modeling a long-term search preference, thereby not only improving understanding degree of a search system to the search intention but also forming an appropriate change query sequence.

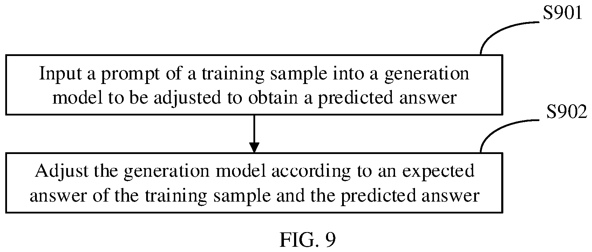

FIG. 9 is a flow chart schematically illustrating a generation model training method according to an embodiment of the present disclosure. The method can include:
S901, inputting a prompt of a training sample into a generation model to be adjusted to obtain a predicted answer; and
S902, adjusting the generation model according to an expected answer of the training sample and the predicted answer,
wherein the prompt of the training sample includes an original query, a change query, a search result and a target instruction.

In embodiments of the present disclosure, the generation model may include a generative large model. The training sample of the generation model may include the prompt and the expected answer. The expected answer may represent an answer expected for the prompt. After the prompt in the training sample is input into the generation model to be adjusted, the generation model can output the predicted answers corresponding to the prompt. The generation model, e.g., some parameters of the generation model may be fine-tuned based on the expected answer and the predicted answer in the training sample, such that the predicted answer output by the generation model is close to the expected answer. After one or more times of fine tuning, a trained generation model can be obtained. Values of training related parameters such as training round (epoch), learning rate, preheating proportion, regularization coefficient used in the fine-tuning process are not specifically limited and can be flexibly adjusted as required.

According to the embodiment of the disclosure, the training sample of the generation model can be constructed based on the change query. Fine-tuning of the generation model using such a training sample can generate a result more relevant to the original search intention, improving the accuracy of the result generated by the generation model.

In an implementation, the prompt is assembled by:
obtaining the original query and the change query corresponding to the original query by sampling a change query dictionary;
obtaining a multi-intent query according to the original query and the change query;
inputting the multi-intent query into a search engine to obtain a reference result; and
assembling a task description area, an interactive information area, a search result area and an instruction area of the prompt according to the original query, the change query, the reference result and the target instruction.

In the embodiment of the disclosure, an assembly template of the prompt may include a task description area, an interactive information area, a search result area and an instruction area. For example, the task description area may describe a task that needs to be executed by the generation model, and may be constructed based on the original query or the multi-intent query. The interactive information area may describe a potential requirement that needs to be referenced by the generation model during answer generating, and may be constructed based on one or more change queries. The search result area can be constructed based on the search result corresponding to the multi-intent query induced from the original query and the change query. The instruction area may be constructed based on the target instruction.

In the embodiment of the disclosure, after the original query and its corresponding change query are obtained by sampling or extracting from the change query dictionary, the original query and the change query can be analyzed by using a large language model to obtain a multi-intent query. The multi-intent query can then be input into a search engine to obtain multiple reference results. The task description area is filled according to the intention of the original query or multi-intent query, and the interactive information area is filled according to the original query and/or multiple change queries. The search result area is filled according to the multiple reference results obtained by searching. The instruction area is filled with the target instruction for representing answer requirements of the generation model.

According to the embodiment of the disclosure, the original query, the change query, the reference result and the target instruction can be combined to obtain the prompt, and the prompt is input into the generation model to obtain the output result (predicted answer) corresponding to the original query. The use of the prompt can enhance the relevance of the prediction result to the original query and the search intention, thereby improving the accuracy of the prediction result.

In some application scenarios, the present disclosure proposes a generative search data flywheel system, forming a forward enhancement loop through continuous data collection and model iteration optimization.

In particular, the present disclosure adopts various strategies such as using semantic information (change query) within explicit feedback signals, designing more efficient feedback aggregation and processing mechanisms, and employing auxiliary signal filtering strategies to reduce feedback signal noise and improve feedback signal quality. In addition, the large model itself may be fine-tuned to improve the efficiency and robustness of feedback signal utilization, as will be described below.

The generative search data flywheel system of the present disclosure can be used to address at least one of the following issues:
1. The result optimization problem cannot be solved in one search.
2. The long-term iteration and continuous updating are needed to achieve the final goal. For example:
   an upstream data content is constantly changing, and a starting state of a flywheel is far away from a final ideal state.
3. There is a need to continuously adjust an online result in an online real-time manner based on feedback from a target object in order to quickly improve the satisfaction of the target object.

The system introduces a target object behavior signal, such as a change in search query (query) of the target object, as a key input for model training and optimization. In such a manner, the system can more accurately capture the real demand and preference of the target object, thereby obviously improving the accuracy, richness and readability of a generative answer to meet the demand of the target object.

The generative search data flywheel system of the disclosure can be applied in the field of generative question answering, and has wide application scenes including an online search engine, a question answering system and a virtual assistant, for example.

This disclosure not only significantly enhances the satisfaction of the target object of the generative question-and-answer but also promotes the technological advancement and development of the related application field. Most generative search systems and intelligent question-and-answer systems framed within the RAG typically provide an answer from a priori perspectives, assuming that the answer might satisfy the target object, while overlooking whether the target object is truly satisfied with the answer. Posterior behavior of the target object serves as a strong feedback signal, which helps in inferring the satisfaction of the target object, guiding the optimization of the large model, and directly aligning with the preference of the target object. The present disclosure therefore proposes an implicit behavioral feedback driven self-augmented data flywheel system. The system, by mining the implicit feedback signal from the target object, guides the generative large model to understand the real demand of the target object, thereby producing an answer that genuinely satisfies the target object and aligns with the demand of the target object.

The target object change query is an important implicit feedback signal. After a target object conducts one search, if the target object is not satisfied, the query will be changed to initiate the next search until the target object is satisfied. The change query data of the target object is not only dense enough, but also indicates a direction towards which the answer should be optimized. The system fuses the implicit feedback signal into the generation model to drive the model to generate an answer which better meets the demand of the target object, thereby improving the satisfaction of the target object accordingly.

This disclosure primarily involves optimization of the following modules: 1. Mining and purifying of behavioral feedback signal, 2. Understanding of behavioral feedback signal, and 3. Signal-based search augmentation. The specific optimization method is described in detail below:

### 1. Mining and purifying of behavioral feedback signal

In the search engine, a dialogue or access process on the search engine is generally referred to as a session. When a target object inputs a keyword in the search engine to conduct a search, it means that the target object opens a session. Subsequently, continuous searching, link clicking, page browsing and other activities within a period of time are considered to be the behaviors under the session, and the session is considered to be closed until the target object is not active any more for a period of time. The session records the interactive process and information flow between the target object and the search engine, which is helpful for understanding the search habit and the search intention of the target object, thereby providing a more personalized and accurate search result. In the embodiment of the disclosure, the acquisition, storage, and application of behavioral feedback signals such as original query and change query are all allowed by a target objects such as a user and conforms to the provisions of related laws and regulations without violating the customs of public order.

### (1) Change query cleaning and aggregating method based on target object intention

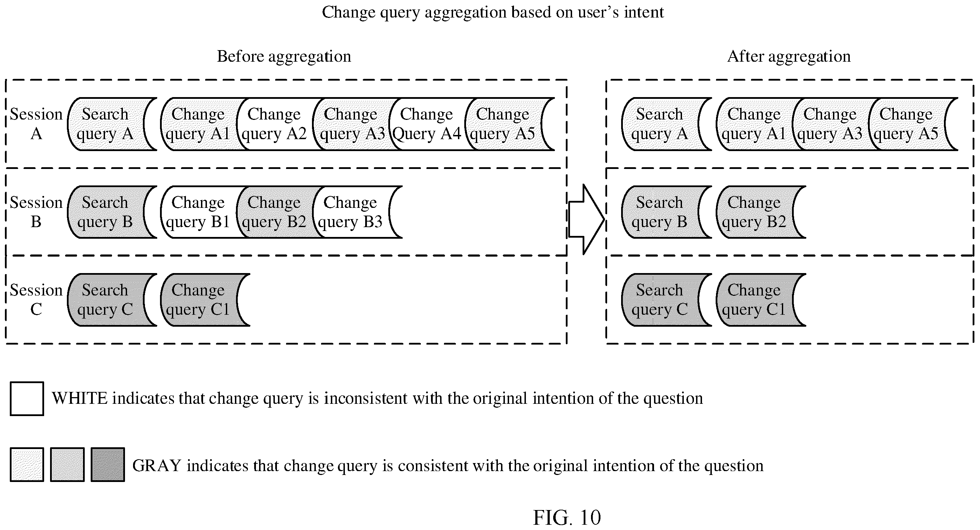

FIG. 10 is a schematic diagram of a change query aggregating method according to an embodiment of the present disclosure. The behaviors of the target object in one session may be complex and contain relatively large amounts of noise, necessitating mining and cleaning to understand the true intent of the target object. Within one session, the target object may change to a number of different questions to conduct the search (an example of a change query). Some of these problems are consistent with the original intent, which may serve as a clarification or a complement to the original problem and which has a strong information gain to meet the original demand of the target object; others are inconsistent with the original intent and are prone to introducing noise.

The system provides a two-stage intention aggregation strategy to clean the change queries of the target object to obtain change queries consistent with the original intention of the question.

The first stage is a rough cleaning based on keyword matching. A similarity score between the change query and the original query is calculated based on text matching algorithms such as TF-IDF and BM25 to judge whether the change query is similar to the intention of the original query. The queries with a similar intention is retained and enters the second stage.

The second stage is an intention discrimination based on semantic understanding. The method based on keyword matching may have difficulty in capturing the similarity between semantics and therefore can make the intention discrimination based on a model such as an ernie model. The original query and the change query can be spliced together and input into the model to obtain the semantic similarity score, thereby further filtering out the change query close to the original intention of the target object.

### (2) Change query aggregating method based on dynamic time window

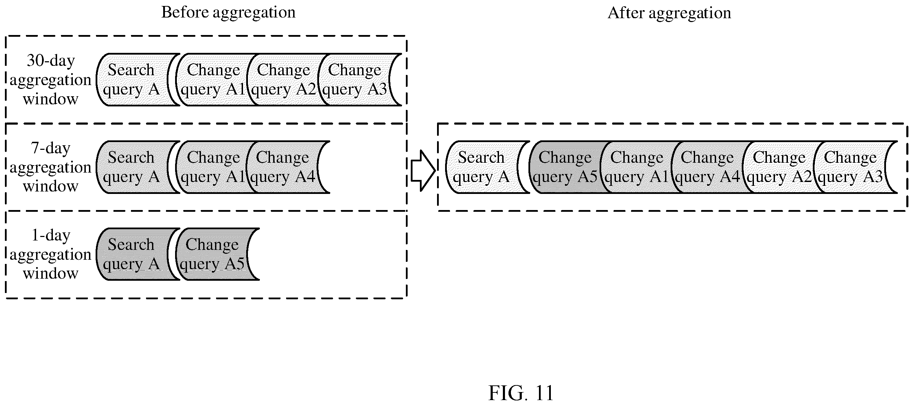

FIG. 11 is a schematic diagram of a change query aggregating method according to an embodiment of the disclosure. The intention of the target object may vary over time, and the search habit of the target object also may vary with the change of the search result. Therefore, the data flywheel system driven by the behavioral feedback of the target object should be a dynamically updated system. A recent behavior represents a recent search intention and attention of the target object, and a long-term behavior represents a long-term interest preference of the target object. Therefore, the system provides a modeling mode for interest preference of the target object based on a dynamic time window and sets multiple aggregation windows from a temporal perspective, such as 1 day, 3 days, 7 days, and 30 days, to aggregate change query data of the target object. This approach not only captures a short-term search intention of the target object but also models a long-term preference of the target object. Finally, according to an optimal effect, a combination form of the multiple aggregation windows is selected to form a final change query sequence, as shown in the figure.

### (3) Change query ranking method based on key features

For one search request (query), the behavioral feedbacks of different target objects are different, and subsequent change queries are also different. The search engine has a huge population of target objects, and the change query data of the target objects is dense. Thus, valuable change query data needs to be filtered out. The following are some key features:

### a. Change query rate:

The change query rate represents a probability of changing from one query, such as Question A which has been queried, to another query, such as Question B, to continue the search. In the present system, historical change query frequency of the target object is used to approximately fit the change query rate. Assuming that 100 target objects searched for Question A, and among them, 30 target objects changed to search for Question B after searching for Question A, while 5 target objects changed to search for Question C, then the change query rate for Question B is 30%, and the change query rate for Question C is 5%. This suggests that the target objects have a higher level of interest in Question B compared to Question A.

### b. Change query source:

After searching for a particular question, the target object initiates a new search with a different question, and search sources are diverse. For example, the target object may actively initiate a new search in the search box; the target object may initiate a new search based on subsequent recommended input words in the search box; the target object may click on his/her own historical search records to initiate a new search; and the target object may click on a recommended search question on a search result page to initiate a new search. Different search sources represent different search intents, such as clarification intent, browsing intent, curiosity intent, and review intent. Therefore, it is necessary to rank and filter change queries based on the search sources.

### c. Target object behavior after change query:

After the target object changes to a new query, there will be a new round of target object interaction and feedback, such as duration of stay and link click. A longer duration of stay may indicate that the content in the search result corresponding to the change query is of interest to the target object. Clicking on a particular link indicates that the link may meet the demand of the target object. Therefore, the behavior of the target object after change query is a strong feedback signal for measuring the importance and value of the current change query.

Based on the above features, the change queries of the target object are fitted score and ranked in descending order. The top k most valuable change queries of the target object are selected as a feedback signal to guide model optimization.

### 2. Understanding of behavioral feedback signal of target object

The behavioral feedback signal of the target object is dense enough. Taking a change query signal of the target object as an example, there may be hundreds of change queries, but intents of the target object therein can be generalized into several categories. For example, intents of the queries can be generalized using a query-understanding Large Language Model (LLM). For example, given that an original search query of the target object is "What is ABC game?", the change queries may include "What does ABC mean?", "What is ABC?", "What games are in ABC?", and "What does ABC game mean?". These can be categorized into three types of intents, as follows:
(1) Definition of ABC game [Specific queries: "What is ABC game?" and "What does ABC game mean?"]
(2) Meaning of ABC [Specific queries: "What is ABC?" and "What does ABC mean?"]
(3) Example of ABC game [Specific query: "What games are in ABC?"]

As can be seen, the change queries of the target object contain rich semantic information, indicating the direction towards which the answer of the model should be optimized. Specifically, the change query information of the target object can be divided into two categories: One category is for a refined demand, such as the definition of "ABC", which indicates that the target object expects the answer can provide a more detailed explanation of what "ABC" specifically means in the ABC game. The other category is for an extended demand, such as "What games are in ABC", which indicates that the target object expects the answer to be more comprehensive, providing not only an explanation of what the ABC game means but also offering examples of specific ABC games.

The system leverages the powerful understanding and summarization capabilities of the generation model to construct training data, enabling the model to learn how to understand and induce the intent indicated in the change query data of the target object, providing thought and guidance for answering for a subsequent model generated answer.

The original query and the change query after one or more steps of the cleaning, the ranking and the aggregating can be stored in the change query dictionary.

### 3. Search augmentation based on behavioral feedback signal of target object

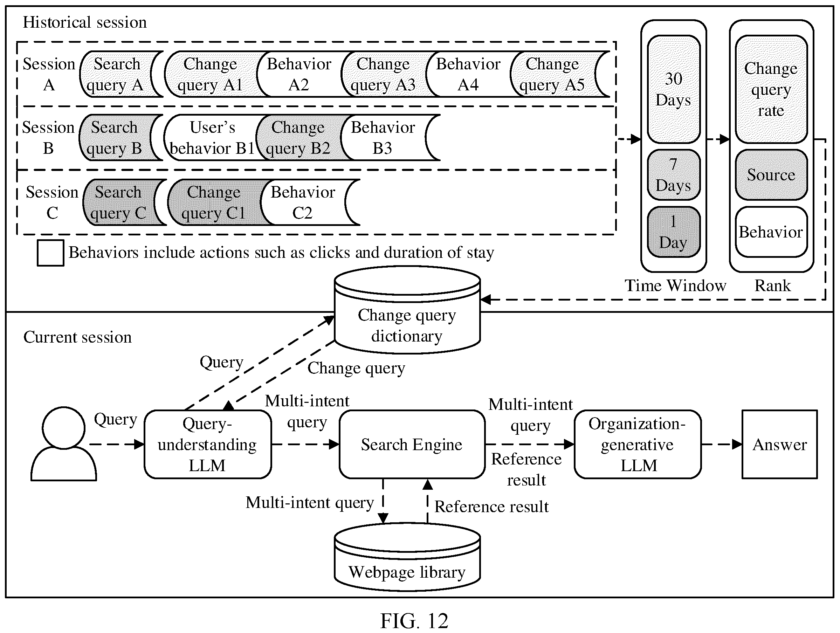

FIG. 12 is a schematic diagram of a generation system according to an embodiment of the present disclosure. The general flow of the RAG (Retrieval-Augmented Generation) framework includes:
(1) Search Stage: First, the input question or text is processed by the search model. The search model can retrieve relevant information from a large knowledge base or corpus, which may include one or more of entity, relationship, fact or text snippet. This retrieved information is then passed as input to the generation model. The purpose of the search stage is to provide the generation model with additional contextual knowledge and information to help generate more accurate and enriched text.
(2) Generation Stage: The generation model receives information from the search stage and uses this information to generate response, summary or other textual content. The generation model could be a language model, such as a Generative Pre-trained Transformer (GPT). The generation model can combine the input information with its own language model to generate output text, ensuring that the output content is relevant and coherent with the searched information.

In the embodiment of the disclosure, the search augmented (or retrieval augmented) system based on behavioral feedback of the target object introduces change query information, and infers more accurate and richer search intention. The searched information obtained by the first search is not enough to completely meet the new search intention inferred by the behavioral feedback. Therefore, search augmentation needs to be performed on the new search intention to supplement relevant information, thereby supporting the model to further infer and generate answers.

### 4. Model enhancement based on behavioral feedback signal of target object

The traditional search-generation framework receives information from the search stage during the generation stage and uses a specific prompt to allow the model to combine the search result to generate an answer to the search question. The specific training and prediction processes for the search enhancement model based on behavioral feedback are as follows:

### (1) Sample structure

a. Mine the behavior feedback signal is, in which the change query information of the target object is cleaned and mined according to the steps as stated above to form a change query dictionary of the target object. For example, after the change queries in the history session are cleaned, the search request (original query) and the change query of the user are aggregated according to the time window, and then the aggregated queries are ranked. The top k queries are selected from the ranking result and stored in the change query dictionary.
b. Extract some original queries and their corresponding change queries, and search the search engine for relevant information as reference information for generating an answer.
c. Construct a prompt which mainly includes four parts: original query, change query, search result and instruction.
d. Annotate an answer /an AI generated answer

Each training sample includes a prompt and an answer (answer). The amount of training sample data is not restricted and can be flexibly chosen as required, for example, a total of 5k training samples.

### (2) Design of prompt

The prompt is mainly divided into four areas: a task description area, an interactive information area of target object, a search result area and a detailed instruction area.

### (3) SFT training

The large model is finely tuned based on a large model base, and training round (epoch), learning rate, preheating proportion, and regularization coefficient can be flexibly set.

### (4) Prediction

Based on a query input in the current session, the change query dictionary of the target object is read to obtain the change queries. A query-understanding LLM is used to induce and comprehend the input query and the original request to obtain a multi-intent query. The multi-intent query is input into a search engine to request the search engine to retrieve a search result, referred to as a reference result. After the prompt is assembled based on the multi-intent query and the reference result, the prompt is input into a trained generation model, such as an organization-generative LLM, to obtain a predicted answer along with other prediction parameters, such as temperature = 0.95, top_p = 0.8, and a penalty coefficient of 1.0.

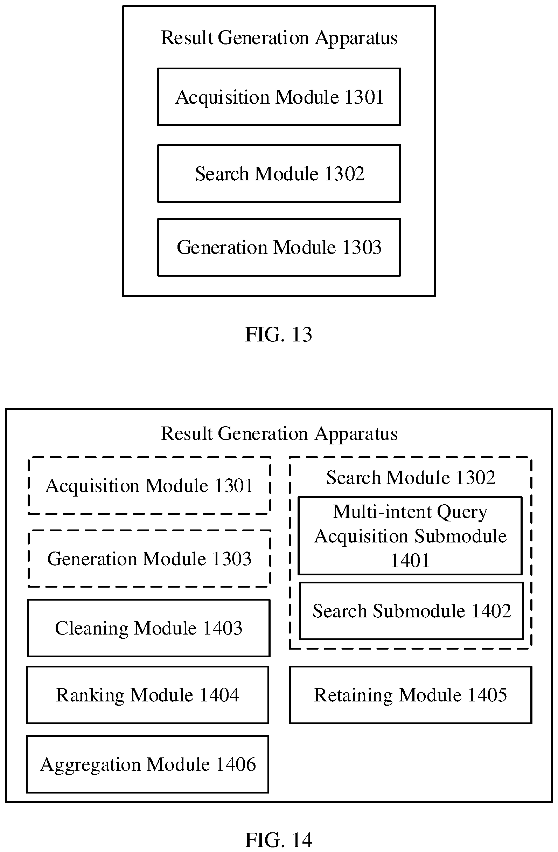

FIG. 13 is a block diagram schematically illustrating a result generation apparatus according to an embodiment of the present disclosure. In an implementation, the apparatus includes:
an acquisition module 1301, configured to acquire a change query corresponding to an input query;
a search module 1302, configured to obtain a reference result by searching according to the input query and the change query corresponding to the input query; and
a generation module 1303, configured to generate an output result corresponding to the input query according to the input query, the change query corresponding to the input query and the reference result.

In an implementation, the acquisition module 1301 is further configured to search a change query dictionary for the change query corresponding to the input query.

FIG. 14 is a block diagram schematically illustrating a result generation apparatus according to another embodiment of the present disclosure. The apparatus may include one or more features of the result generation apparatus described above. In an implementation, the search module 1302 includes:
a multi-intent query acquisition submodule 1401, configured to obtain a multi-intent query according to the input query and the change query corresponding to the input query; and
a search submodule 1402, configured to input the multi-intent query into a search engine to obtain the reference result.

In an implementation, the multi-intent query obtaining sub-module 1401 is further configured to obtain the multi-intent query by using a large language model to induce the input query and the change query corresponding to the input query.

In an implementation, the generation module 1303 is further configured to input the multi-intent query and the reference result into a generation model to obtain the output result corresponding to the input query.

In an implementation, a training sample of the generation model includes a prompt and an answer, and the prompt includes an original query, a change query, a search result, and a target instruction.

In an implementation, the original query and the change query are obtained by sampling the change query dictionary.

In an implementation, as shown in FIG. 14, the apparatus further includes:
a cleaning module 1403, configured to clean multiple change queries associated with the original query in a session according to a search intention of the original query.

In an implementation, the cleaning module 1403 is further configured to at least one of:
obtain, based on keyword matching, a first similarity between the original query and the change query in the session, determine whether the search intention of the original query is similar to a search intention of the change query according to the first similarity, and retain the change query has the search intention similar to the original query; or
obtain, based on semantic understanding for intention discrimination, a second similarity between the original query and the change query in the session, determine whether the search intention of the original query is similar to the search intention of the change query according to the second similarity, and retain the change query has the search intention similar to the original query.

In an implementation, as shown in FIG. 14, the apparatus further includes:
a ranking module 1404, configured to rank multiple change queries associated with the original query based on a key feature, wherein the key feature includes at least one of: a change query rate, a change query source or feedback information after change query; and
a retaining module 1405, configured to select a retained change query from the multiple change queries associated with the original query according to a ranking result.

In an implementation, as shown in FIG. 14, the apparatus further includes:
an aggregation module 1406 is configured to aggregate, based on a dynamic time window, the original query and the retained change query according to the search intention.

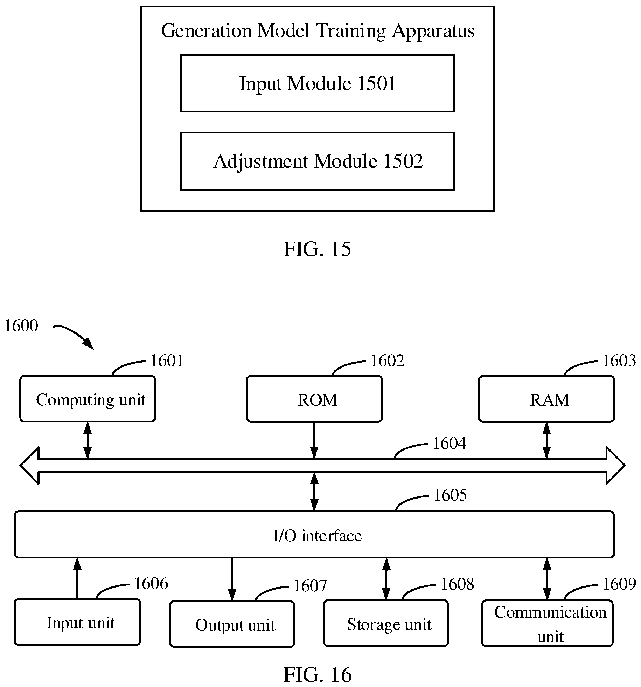

FIG. 15 is a block diagram schematically illustrating a generation model training apparatus according to an embodiment of the present disclosure. In an implementation, the apparatus includes:
an input module 1501, configured to input a prompt of a training sample into a generation model to be adjusted to obtain a predicted answer; and
an adjustment module 1502, configured to adjust the generation model according to an expected answer of the training sample and the predicted answer,
wherein the prompt of the training sample includes an original query, a change query, a search result and a target instruction.

In an implementation, the prompt is assembled by:
obtaining the original query and the change query corresponding to the original query by sampling a change query dictionary;
obtaining a multi-intent query according to the original query and the change query;
inputting the multi-intent query into a search engine to obtain a reference result; and
assembling a task description area, an interactive information area, a search result area and an instruction area of the prompt according to the original query, the change query, the reference result and the target instruction.

For a description of specific functions and examples of each module and each submodule of the apparatus in the embodiment of the disclosure, reference may be made to the related description of the corresponding steps in the foregoing method embodiments, and details thereof will not be repeated herein.

In the technical scheme of the disclosure, the acquisition, storage, and application of the involved user personal information comply with relevant laws and regulations, and do not violate public order and good customs.

According to the embodiments of the present disclosure, the present disclosure also provides an electronic device, a readable storage medium and a computer program product.

FIG. 16 shows a schematic block diagram of an exemplary electronic device 1600 that may be used to implement the embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processing, a cellular phone, a smart phone, a wearable device and other similar electronic devices. The components shown herein, their connections and relationships, and their functions are merely examples, and are not intended to limit the implementation of the present disclosure described and/or required herein.

As shown in FIG. 16, the device 1600 includes a computing unit 1601 that may perform various appropriate actions and processes according to a computer program stored in a Read-Only Memory (ROM) 1602 or a computer program loaded from a storage unit 1608 into a Random Access Memory (RAM) 1603. Various programs and data required for an operation of device 1600 may also be stored in the RAM 1603. The computing unit 1601, the ROM 1602 and the RAM 1603 are connected to each other through a bus 1604. The input/output (I/O) interface 1605 is also connected to the bus 1604.

A plurality of components in the device 1600 are connected to the I/O interface 1605, and include an input unit 1606 such as a keyboard, a mouse, or the like; an output unit 1607 such as various types of displays, speakers, or the like; the storage unit 1608 such as a magnetic disk, an optical disk, or the like; and a communication unit 1609 such as a network card, a modem, a wireless communication transceiver, or the like. The communication unit 1609 allows the device 1600 to exchange information/data with other devices through a computer network such as the Internet and/or various telecommunication networks.

The computing unit 1601 may be various general-purpose and/or special-purpose processing components with processing and computing capabilities. Some examples of the computing unit 1601 include, but are not limited to, a Central Processing Unit (CPU), a Graphics Processing Unit (GPU), various dedicated Artificial Intelligence (AI) computing chips, various computing units that run machine learning model algorithms, a Digital Signal Processor (DSP), and any appropriate processors, controllers, microcontrollers, or the like. The computing unit 1601 performs various methods and processing described above, such as the above result generation method and/or generation model training method. For example, in some implementations, the above result generation method and/or generation model training method may be implemented as a computer software program tangibly contained in a computer-readable medium, such as the storage unit 1608. In some implementations, a part or all of the computer program may be loaded and/or installed on the device 1600 via the ROM 1602 and/or the communication unit 1609. When the computer program is loaded into RAM 1603 and executed by the computing unit 1601, one or more steps of the result generation method and/or generation model training method described above may be performed. Alternatively, in other implementations, the computing unit 1601 may be configured to perform the above result generation method and/or generation model training method by any other suitable means (e.g., by means of firmware).

Various implementations of the system and technologies described above herein may be implemented in a digital electronic circuit system, an integrated circuit system, a Field Programmable Gate Array (FPGA), an Application Specific Integrated Circuit (ASIC), Application Specific Standard Parts (ASSP), a System on Chip (SOC), a Complex Programmable Logic Device (CPLD), a computer hardware, firmware, software, and/or a combination thereof. These various implementations may be implemented in one or more computer programs, and the one or more computer programs may be executed and/or interpreted on a programmable system including at least one programmable processor. The programmable processor may be a special-purpose or general-purpose programmable processor, may receive data and instructions from a storage system, at least one input device, and at least one output device, and transmit the data and the instructions to the storage system, the at least one input device, and the at least one output device.

The program code for implementing the method of the present disclosure may be written in any combination of one or more programming languages. The program code may be provided to a processor or controller of a general-purpose computer, a special-purpose computer or other programmable data processing devices, which enables the program code, when executed by the processor or controller, to cause the function/operation specified in the flowchart and/or block diagram to be implemented. The program code may be completely executed on a machine, partially executed on the machine, partially executed on the machine as a separate software package and partially executed on a remote machine, or completely executed on the remote machine or a server.

In the context of the present disclosure, a machine-readable medium may be a tangible medium, which may contain or store a procedure for use by or in connection with an instruction execution system, device or apparatus. The machine-readable medium may be a machine-readable signal medium or a machine-readable storage medium. The machine-readable medium may include, but is not limited to, an electronic, magnetic, optical, electromagnetic, infrared or semiconductor system, device or apparatus, or any suitable combination thereof. More specific examples of the machine-readable storage medium may include electrical connections based on one or more lines, a portable computer disk, a hard disk, a Random Access Memory (RAM), a Read-Only Memory (ROM), an Erasable Programmable Read-Only Memory (EPROM or a flash memory), an optical fiber, a portable Compact Disc Read-Only Memory (CD-ROM), an optical storage device, a magnetic storage device, or any suitable combination thereof.

In order to provide interaction with a user, the system and technologies described herein may be implemented on a computer that has: a display apparatus (e.g., a cathode ray tube (CRT) or a Liquid Crystal Display (LCD) monitor) for displaying information to the user; and a keyboard and a pointing device (e.g., a mouse or a trackball) through which the user may provide input to the computer. Other types of devices may also be used to provide interaction with the user. For example, feedback provided to the user may be any form of sensory feedback (e.g., visual feedback, auditory feedback, or tactile feedback), and the input from the user may be received in any form (including an acoustic input, a voice input, or a tactile input).

The system and technologies described herein may be implemented in a computing system (which serves as, for example, a data server) including a back-end component, or in a computing system (which serves as, for example, an application server) including a middleware, or in a computing system including a front-end component (e.g., a user computer with a graphical user interface or web browser through which the user may interact with the implementation of the system and technologies described herein), or in a computing system including any combination of the back-end component, the middleware component, or the front-end component. The components of the system may be connected to each other through any form or kind of digital data communication (e.g., a communication network). Examples of the communication network include a Local Area Network (LAN), a Wide Area Network (WAN), and the Internet.

A computer system may include a client and a server. The client and server are generally far away from each other and usually interact with each other through a communication network. A relationship between the client and the server is generated by computer programs running on corresponding computers and having a client-server relationship with each other. The server may be a cloud server, a distributed system server, or a blockchain server.

It should be understood that, the steps may be reordered, added or removed by using the various forms of the flows described above. For example, the steps recorded in the present disclosure can be performed in parallel, in sequence, or in different orders, as long as a desired result of the technical scheme disclosed in the present disclosure can be realized, which is not limited herein.

The foregoing specific implementations do not constitute a limitation on the protection scope of the present disclosure. Those having ordinary skill in the art should understand that, various modifications, combinations, sub-combinations and substitutions may be made according to a design requirement and other factors. Any modification, equivalent replacement, improvement or the like made within the principle of the present disclosure shall be included in the protection scope of the present disclosure.

## Claims

1. A result generation method, **characterized by** comprising:
acquiring (S301) a change query corresponding to an input query;
obtaining (S302) a reference result by searching according to the input query and the change query corresponding to the input query; and
generating (S303) an output result corresponding to the input query according to the input query, the change query corresponding to the input query and the reference result.

2. The method of claim 1, wherein the acquiring (S301) of the change query corresponding to the input query, comprises:
searching (S401) a change query dictionary for the change query corresponding to the input query.

3. The method of claim 1, wherein the obtaining (S302) of the reference result by searching according to the input query and the change query corresponding to the input query comprises:
obtaining (S501) a multi-intent query according to the input query and the change query corresponding to the input query; and
inputting (S502) the multi-intent query into a search engine to obtain the reference result.

4. The method of claim 3, wherein the obtaining (S501) of the multi-intent query according to the input query and the change query corresponding to the input query comprises:
obtaining the multi-intent query by using a large language model to induce the input query and the change query corresponding to the input query.

5. The method of claim 3, wherein the generating (S303) of the output result corresponding to the input query according to the input query, the change query corresponding to the input query and the reference result comprises:
inputting the multi-intent query and the reference result into a generation model to obtain the output result corresponding to the input query.

6. The method of claim 1, wherein a training sample of a generation model comprises a prompt and an answer, and the prompt comprises an original query, a change query, a search result, and a target instruction.

7. The method of claim 1, wherein an original query and the change query are obtained by sampling a change query dictionary.

8. The method of claim 1, further comprising:
cleaning (S601) a plurality of change queries associated with an original query in a session according to a search intention of the original query;
wherein cleaning the plurality of change queries associated with the original query in the session according to the search intention of the original query comprises at least one of:
obtaining, based on keyword matching, a first similarity between the original query and the change query in the session, determining whether the search intention of the original query is similar to a search intention of the change query according to the first similarity, and retaining the change query has the search intention similar to the original query; or
obtaining, based on semantic understanding for intention discrimination, a second similarity between the original query and the change query in the session, determining whether the search intention of the original query is similar to the search intention of the change query according to the second similarity, and retaining the change query has the search intention similar to the original query.

9. The method of any one of claims 1 to 8, further comprising:
ranking (S701) a plurality of change queries associated with the original query based on a key feature, wherein the key feature includes at least one of: a change query rate, a change query source or feedback information after change query; and
selecting (S702) a retained change query from the plurality of change queries associated with the original query according to a ranking result.

10. The method of any one of claims 1 to 9, further comprising:
aggregating (S801), based on a dynamic time window, the original query and a retained change query according to a search intention.

11. A generation model training method, **characterized by** comprising:
inputting (S901) a prompt of a training sample into a generation model to be adjusted to obtain a predicted answer; and
adjusting (S902) the generation model according to an expected answer of the training sample and the predicted answer,
wherein the prompt of the training sample includes an original query, a change query, a search result and a target instruction.

12. The method of claim 11, wherein the prompt is assembled by:
obtaining the original query and the change query corresponding to the original query by sampling a change query dictionary;
obtaining a multi-intent query according to the original query and the change query;
inputting the multi-intent query into a search engine to obtain a reference result; and
assembling a task description area, an interactive information area, a search result area and an instruction area of the prompt according to the original query, the change query, the reference result and the target instruction.

13. A result generation apparatus, **characterized by** comprising:
an acquisition module (1301), configured to acquire a change query corresponding to an input query;
a search module (1302), configured to obtain a reference result by searching according to the input query and the change query corresponding to the input query; and
a generation module (1303), configured to generate an output result corresponding to the input query according to the input query, the change query corresponding to the input query and the reference result.

14. The apparatus of claim 13, wherein the acquisition module (1301) is further configured to search a change query dictionary for the change query corresponding to the input query.

15. The apparatus of claim 13, wherein the search module (1302) comprises:
a multi-intent query acquisition submodule (1401), configured to obtain a multi-intent query according to the input query and the change query corresponding to the input query; and
a search submodule (1402), configured to input the multi-intent query into a search engine to obtain the reference result.

16. The apparatus according to claim 15, wherein the multi-intent query obtaining sub-module (1401) is further configured to obtain the multi-intent query by using a large language model to induce the input query and the change query corresponding to the input query.

17. The apparatus of claim 15, wherein the generation module (1303) is further configured to input the multi-intent query and the reference result into a generation model to obtain the output result corresponding to the input query.

18. The apparatus of claim 13, wherein a training sample of a generation model comprises a prompt and an answer, and the prompt comprises an original query, a change query, a search result, and a target instruction.

19. The apparatus of claim 13, wherein an original query and the change query are obtained by sampling a change query dictionary.

20. The apparatus of claim 13, **characterized by** further comprising:
a cleaning module (1403), configured to clean a plurality of change queries associated with an original query in a session according to a search intention of the original query;
wherein the cleaning module (1403) is further configured to at least one of:
obtain, based on keyword matching, a first similarity between the original query and the change query in the session, determine whether the search intention of the original query is similar to a search intention of the change query according to the first similarity, and retain the change query has the search intention similar to the original query; or
obtain, based on semantic understanding for intention discrimination, a second similarity between the original query and the change query in the session, determine whether the search intention of the original query is similar to the search intention of the change query according to the second similarity, and retain the change query has the search intention similar to the original query.

21. The apparatus of any one of claims 13 to 20, further comprising:
a ranking module (1404), configured to rank a plurality of change queries associated with the original query based on a key feature, wherein the key feature includes at least one of: a change query rate, a change query source or feedback information after change query; and
a retaining module (1404), configured to select a retained change query from the plurality of change queries associated with the original query according to a ranking result.

22. The apparatus of any one of claims 13 to 21, further comprising:
an aggregation module (1406), configured to aggregate, based on a dynamic time window, the original query and the retained change query according to the search intention.

23. A generation model training apparatus, **characterized by** comprising:
an input module (1501), configured to input a prompt of a training sample into a generation model to be adjusted to obtain a predicted answer; and
an adjustment module (1502), configured to adjust the generation model according to an expected answer of the training sample and the predicted answer,
wherein the prompt of the training sample includes an original query, a change query, a search result and a target instruction.

24. The apparatus of claim 23, wherein the prompt is assembled by:
obtaining the original query and the change query corresponding to the original query by sampling a change query dictionary;
obtaining a multi-intent query according to the original query and the change query;
inputting the multi-intent query into a search engine to obtain a reference result; and
assembling a task description area, an interactive information area, a search result area and an instruction area of the prompt according to the original query, the change query, the reference result and the target instruction.

25. A non-transitory computer readable storage medium storing a computer instruction wherein the computer instruction causes a computer to perform the method of any one of claims 1 to 10 or the method of any one of claims 11 to 12.
